# EUROPÄISCHE PATENTSCHRIFT

(11) **EP 3 415 782 B1**
(45) Veröffentlichungstag und Bekanntmachung des Hinweises auf die Patenterteilung: **05.08.2020**
(21) Anmeldenummer: 18175462.3
(22) Anmeldetag: 01.06.2018
(51) Int. Cl.: F16D 65/12, G01P 3/488

(54) **BREMSSCHEIBE UND SCHEIBENBREMSE**
BRAKE DISK AND DISK BRAKE
DISQUE DE FREIN ET FREIN À DISQUE

(30) Priorität: 12.06.2017 DE 102017112856
(43) Veröffentlichungstag der Anmeldung: 19.12.2018
(73) Patentinhaber: KNORR-BREMSE Systeme für Nutzfahrzeuge GmbH, 80809 München (DE)
(72) Erfinder: KOTTEDER, Stephan, 94486 Osterhofen (DE); SCHROPP, Josef, 94428 Eichendorf (DE)

(56) Entgegenhaltungen:
- EP-A1- 0 085 361
- EP-A1- 1 102 939
- EP-A1- 2 028 387
- EP-A1- 3 106 702
- DE-B3-102008 017 360

## Beschreibung

Die vorliegende Erfindung betrifft eine Bremsscheibe für eine Scheibenbremse eines Nutzfahrzeugs gemäß dem Oberbegriff des Anspruchs 1 sowie eine Scheibenbremse.

Bei gattungsgemäßen Bremsscheiben, insbesondere Verbundbremsscheiben, beispielsweise bekannt aus der DE10 2009 012 216 A1 oder der DE 198 39763 B4, sind in der Regel die Reibringe der Bremsscheibe direkt oder über einen Bremsscheibentopf an einer Nabe rotationsfest zur Fahrzeugachse befestigt.

Die kreisringförmigen Reibringe bilden dabei üblicherweise ein Paar von wechselseitigen entgegengesetzten Bremsflächen, auf die Bremsbeläge der Scheibenbremse bei einem Bremsvorgang angedrückt werden. Um die bei diesem Bremsvorgang entstehende Reibungsenergie abzuführen, ist es bekannt, die Reibringe innen zu belüften.

Die Bremsscheibentöpfe sind in der Regel fest bzw. einstückig an dem oder den Reibringen der Bremsscheibe angeordnet oder, wie in der DE10 2009 012 216 A1 offenbart, der Innenumfang der Reibringe und ein Außenumfang der Bremsscheibentöpfe sind zur Übertragung eines bei einem Bremsvorgang entstehenden Drehmoments mit jeweiligen ineinandergreifenden Profilierungen versehen, so dass die jeweilige Bremsscheibe spezifisch zur Anbindung auf eine vorstehende Fahrzeugachse ausgelegt ist. Problematisch ist hier stets die unterschiedliche wärmebedingte Ausdehnung der Reibringe gegenüber den Bremsscheibentöpfen, was insbesondere ein Schirmen oder allgemein Verspannen der Bremsscheibe nach sich ziehen kann.

Bei den direkt an der Nabe angebrachten Reibringen sind im Falle der DE 198 39763 B4 und der an der Nabe Nocken angebracht, die zwischen Abstützelemente am Innenumfang der Reibringe eingreifen. Die Nocken und die Abstützelemente sind dabei so geformt, dass durch diese sowohl eine Übertragung des bei einem Bremsvorgang entstehenden Drehmomentes von den Reibringen auf die Nabe als auch eine axiale Abstützung der Reibringe erfolgt.

Aus der EP 1 102 939 A1 ist eine Bremsscheibe mit einem Bremsscheibentopf bekannt, bei der von dem Bremsscheibentopf ein sich radial nach außen zur Bremsscheibe hin erstreckender Verbindungsring angeformt ist, der über auf Sechskantschrauben aufgesteckte Distanzbuchsen, die durch Bohrungen in einem sich radial nach innen erstreckenden Ring der Bremsscheibe gesichert sind.

Bei der EP 0 085 361 A1 sind an der Nabenaußenseite Vorsprünge angebracht, die zwischen sich radial nach innen erstreckenden Vorsprüngen am Innenumfang jeweiliger Reibringhälften aufgenommen sind. Die Vorsprünge der Reibringhälften sind mit Durchbohrungen versehen, in denen Hohlbolzen mit einem Bolzenkopf aufgenommen sind. Die Hohlbolzen sind desweiteren in Bohrungen oder Nuten der Vorsprünge der Nabe aufgenommen. Zur Festlegung der Hohlbolzen wird von der dem Bolzenkopf abgewandten Seite eine Schraube in die Hohlbolzen eingedreht.

Aufgabe der vorliegenden Erfindung ist es, eine Bremsscheibe für eine Scheibenbremse eines Nutzfahrzeugs, sowie eine Scheibenbremse bereitzustellen, mit der eine vereinfachte Montage sowie eine größere Variabilität für den Einsatz der Reibringe ermöglicht ist.

Diese Aufgabe wird durch eine Bremsscheibe für eine Scheibenbremse eines Nutzfahrzeugs mit den Merkmalen des Anspruchs 1 sowie durch eine Scheibenbremse mit den Merkmalen des Anspruchs 17 gelöst.

Die erfindungsgemäße Bremsscheibe weist einen Reibring mit einer oder zwei Reibflächen auf, wenigstens ein sich von einem inneren Umfang des Reibringes axial zu einer Drehachse der Bremsscheibe erstreckendes Anschlusselement zur Befestigung der Bremsscheibe an einer Radachse. Dieses Anschlusselement ist über Verbindungselemente lösbar mit dem Reibring verbunden, wobei am inneren Umfang des Reibrings mehrere radial zur Drehachse der Bremsscheibe hin vorstehende Koppelteile mit jeweils wenigstens einer Ausnehmung angeformt sind und wobei die Verbindungselemente in den Ausnehmungen des wenigstens einen Koppelteils und in Aufnahmen des Anschlusselements aufgenommen sind. Jedes der Koppelteile weist dabei eine als, zur Drehachse der Bremsscheibe hin offene Aufnahmenut ausgebildete Ausnehmung und einen sich in Umfangsrichtung des Reibrings erstreckenden Schlitz auf, in dem ein sich radial zur Drehachse der Bremsscheibe erstreckender erster Vorsprung des Anschlusselements mit einer zum inneren Umfang des Reibringes hin offenen Nut aufnehmbar ist.

Durch die lösbare Verbindung des Anschlusselements mit dem Reibring ist in einfacher Weise ein Lösen von Anschlusselement und Reibring ermöglicht, was insbesondere im Servicefall von Vorteil ist.

Ein weiterer Vorteil der lösbaren Verbindung von Anschlusselement mit dem Reibring besteht darin, dass der Reibring an unterschiedlich ausgebildete Anschlusselemente anschließbar ist, so dass der Reibring mit unterschiedlich gestalteten Anschlusselementen miteinander verbindbar ist und so eine Nutzung eines Reibrings vorbestimmter Größe und Bauart für unterschiedliche Fahrzeugachsen in einfacher Weise ermöglicht ist.

Ein weiterer Vorteil der lösbaren Verbindung von Anschlusselement mit dem Reibring besteht darin, dass bei verschlissenem Reibring und intaktem Anschlusselement das Anschlusselement gegebenenfalls an einem neuen Reibring erneut angebracht werden kann.

Die lösbare Verbindung des Anschlusselements mit dem Reibring ermöglicht des Weiteren die Umsetzung eines Baukastenprinzips, so dass bei Vorhalten einer Anzahl von Reibringen und Anschlusselementen eine Vielzahl von Anschlusselement-Reibringkombinationen ermöglicht ist.

Durch den Aufbau der Koppelteile ist ermöglicht, das vorzugsweise als Bremsscheibentopf ausgebildete Anschlusselement durch Vorschieben der ersten Vorsprünge des Anschlusselements in die Ebene der Schlitze der Koppelteile in einer Richtung parallel zur Drehachse der Bremsscheibe vorzuschieben und durch anschließendes Verdrehen der ersten Vorsprünge in die Schlitze hinein einerseits eine axiale Fixierung zwischen Anschlusselement und Reibring zu erreichen und zum zweiten eine Dehnung des Reibrings in radialer Richtung bei eingesetzten Verbindungselementen zuzulassen.
Vorteilhafte Ausführungsvarianten der Erfindung sind Gegenstand der Unteransprüche.

Gemäß einer vorteilhaften Ausführungsvariante der Erfindung ist das Anschlusselement als Bremsscheibentopf ausgebildet. Denkbar ist auch, das Anschlusselement als Nabe auszubilden, wodurch ermöglicht ist, die Bremsscheibe direkt auf einer Radachse zu montieren.

Die Verbindungselemente zur Verbindung des Anschlusselements mit dem Reibring sind bevorzugt als Schrauben, Bolzen oder Niete ausgebildet, durch die eine einfach durchzuführende Montage und Demontage ermöglicht ist.

Nach einer weiteren bevorzugten Ausführungsvariante ist wenigstens ein Ende der Verbindungselemente in einem das Anschlusselement mit dem Reibring verbindenden, montierten Zustand vertaumelt.

Die Ausnehmung des wenigstens einen Koppelteils, das sich vom inneren Umfang des Reibrings radial zur Drehachse der Bremsscheibe hin erstreckt, ist bevorzugt als Bohrung oder auch als Langloch ausgebildet.

Um insbesondere eine radiale Ausdehnung des Reibrings infolge einer Erhitzung bei einem Bremsvorgang zu ermöglichen, sind am inneren Umfang des Reibrings mehrere radial zur Drehachse der Bremsscheibe hin vorstehende Koppelteile angeformt.

Die bevorzugt als Schrauben oder Bolzen ausgebildeten Verbindungselemente weisen in einer besonderen Ausführungsvariante ein in der Ausnehmung des jeweiligen Koppelteils und des jeweiligen Vorsprungs radial bewegbares abgeflachtes Halsteil auf.

Die Vorsehung eines solchen abgeflachten Halsteils begünstigt dabei ein radiales Gleiten der Innenseiten der Aufnahmenute der Koppelteile an den Verbindungselementen sowie der Innenseiten des Vorsprungs des Anschlusselements an den Verbindungselementen,

Um die Demontage des Anschlusselements von dem Reibring zusätzlich zu erleichtern, sind die Koppelteile zum Schlitz hin abgefast ausgebildet. Dadurch ist ermöglicht, beispielsweise mit einem Meißel, insbesondere bei starker Korrosion der aneinander liegenden Bauteile, die aneinander liegenden Bauteile zu lockern und so in einfacher Weise das Anschlusselement vom Reibring lösen zu können.

Um baubedingte Toleranzen der Verbindungselemente und der Koppelteile auszugleichen, ist gemäß einer weiteren bevorzugten Ausführungsvariante in den Ausnehmungen des jeweiligen Koppelteils und den Nuten des jeweiligen Vorsprungs wenigstens ein Federelement angeordnet, das sich einerseits an dem Halsteil der als Schrauben oder Bolzen ausgebildeten Verbindungselemente und andererseits an einer sich radial erstreckenden, die Ausnehmungen seitlich begrenzenden Innenwand der Koppelteile abstützt.

Die Federelemente sind dabei besonders bevorzugt in einer jeweiligen Aussparung im Halsteil der als Schrauben oder Bolzen ausgebildeten Verbindungselemente aufgenommen.

Die Begünstigung der radialen Verschiebung zwischen den Koppelelementen und den Vorsprüngen des Anschlusselements kann gemäß einer weiteren bevorzugten Ausführungsvariante auch dadurch erfolgen, dass die Halsteile der als Schrauben oder Bolzen ausgebildeten Verbindungselemente in einem jeweiligen Mitnehmerelement aufgenommen sind, das in einer jeweiligen Nut des jeweiligen Koppelteils und in einer Aufnahmenut eines jeweiligen Vorsprungs des Anschlusselements gleitbar geführt ist.

Das Halsteil der Verbindungselemente kann bei dieser Ausführungsvariante auch einen kreisringförmigen Querschnitt aufweisen, so dass hier beispielsweise einfache Schrauben mit einem Schraubenkopf und einem Schraubenhals eingesetzt werden können, wobei an dem dem Schraubenkopf beabstandeten Ende des Schraubenhalses ein Gewinde angeformt ist, auf das eine Schraubenmutter zur axialen Fixierung der Koppelteile mit dem Anschlusselement aufschraubbar ist.

Gemäß einer weiteren Ausführungsvariante erstreckt sich der radial ausgerichtete erste Vorsprung des Anschlusselements von einer Umfangsaußenfläche eines sich axial zur Drehachse der Bremsscheibe erstreckenden zweiten Vorsprungs des Anschlusselements, wobei dieser zweite Vorsprung über die gesamte axiale Breite der Koppelteile vorsteht. Durch diese zweiten Vorsprünge, die bevorzugt fingerartig sich in axialer Richtung von einem Flansch des Anschlusselements weg erstrecken, ist es ermöglicht, zwischen den einzelnen Vorsprüngen hinreichend große Öffnungen zur Belüftung der Bremsscheibe zu belassen.
Der Einsatz solcher Mitnehmer, in denen die Verbindungselemente durchgesteckt sind, zeichnen sich des Weiteren durch eine vergrößerte Oberfläche und den damit einhergehenden verbesserten Wärmetransport aus.

Die Mitnehmerelemente können dabei gemäß einer Ausführungsvariante eine zentrale Bohrung zur Aufnahme eines der Verbindungselemente aufweisen, wobei das Mitnehmerelement zwei das Koppelteil umgreifende Anschlagflächen zur radial gleitfähigen Führung in der Nut des Koppelteils aufweist.

Alternativ weist jedes der Mitnehmerelemente eine dezentrale Bohrung zur Aufnahme eines der Verbindungselemente auf, wobei radial ausgerichtete, den Reibflächen nahe Außenflächen des Mitnehmerelements in der Nut des zweiten Vorsprungs des Anschlusselementes geführt sind.

Nachfolgend werden bevorzugte Ausführungsbeispiele der Erfindung anhand der beiliegenden Zeichnungen näher erläutert. Es zeigen:
- Figur 1: eine perspektivische Ansicht einer Ausführungsvariante einer Bremsscheibe mit Reibring und daran lösbar befestigtem Anschlusselement,
- Figur 2: eine weitere perspektivische Darstellung der in Figur 1 gezeigten Bremsscheibe aus einer anderen Perspektive mit als Bremsscheibentopf ausgebildetem Anschlusselement,
- Figur 3: eine Schnittansicht eines Ausschnitts der in Figur 1 gezeigten Bremsscheibe,
- Figur 4: eine perspektivische Ansicht einer alternativen Ausführungsvariante einer Bremsscheibe mit als zur Drehachse der Bremsscheibe hin offenen Nuten zur Aufnahme der Verbindungselemente,
- Figur 5: eine weitere alternative Ausführungsvariante einer Bremsscheibe, ähnlich der in Figur 4 gezeigten Bremsscheibe,
- Figur 6: eine Schnittansicht durch die in Figur 5 gezeigte Bremsscheibe zur Darstellung der Verbindung zwischen Reibring und Anschlusselement über ein in einem Mitnehmer geführten Verbindungselement,
- Figur 7: eine perspektivische Darstellung einer Ausführungsvariante eines Verbindungselements, das in einem Mitnehmerbauteil geführt ist, welches in einer Nut eines Koppelteils der Bremsscheibe geführt ist,
- Figur 8: eine Schnittansicht durch das durch das Mitnehmerbauteil durchgesteckte Verbindungselement gemäß Figur 7, allerdings im zusammengesteckten Zustand,
- Figur 9: eine perspektivische Einzeldarstellung eines solchen Mitnehmerelements,
- Figur 10: eine perspektivische Darstellung einer Ausführungsvariante einer erfindungsgemäßen Bremsscheibe mit als Bremsscheibentopf ausgebildetem Anschlusselement,
- Figur 11: eine perspektivische Darstellung des Bremsscheibentopfes der in Figur 10 gezeigten Bremsscheibe,
- Figur 12: eine perspektivische Darstellung des Reibrings mit am Innenumfang angeformten Koppelteilen der in Figur 10 dargestellten Bremsscheibe,
- Figur 13: eine Schnittansicht durch die in Figur 10 dargestellte Bremsscheibe zur Darstellung der Verbindung zwischen Reibring und Anschlusselement,
- Figur 14: eine perspektivische Darstellung einer bevorzugten Ausführungsvariante eines Verbindungselements,
- Figur 15: eine perspektivische Detaildarstellung der am Reibring angeformten Koppelteile mit darin aufgenommenen Verbindungselementen,
- Figur 16: eine perspektivische Ansicht des Reibrings mit Koppelteilen vor der Montage des Anschlusselements,
- Figur 17: eine weitere perspektivische Teilschnittdarstellung eines Reibrings mit daran angeformten Koppelteilen, in denen ein Verbindungselement mit darin eingelassenem Federelement aufgenommen ist,
- Figur 18: eine perspektivische Ansicht eines solchen mit Federelement ausgestatteten Verbindungselements,
- Figur 19: eine Draufsicht auf eine weitere alternative Ausführungsvariante einer erfindungsgemäßen Bremsscheibe,
- Figur 20: eine perspektivische Darstellung einer weiteren alternativen Ausführungsvariante einer erfindungsgemäßen Bremsscheibe,
- Figur 21: eine weitere perspektivische Darstellung der Ausführungsvariante einer erfindungsgemäßen Bremsscheibe gemäß Figur 20 mit Mitnehmern mit dezentraler Öffnung zur Aufnahme der Verbindungselemente und in sich axial erstreckenden Schlitzen des Anschlusselements, in dem die Mitnehmerbauteile geführt sind,
- Figur 22: eine Schnittdarstellung durch einen Ausschnitt der Bremsscheibe gemäß Figur 21, und
- Figuren 23 und 24: perspektivische Darstellungen unterschiedlicher Varianten von Mitnehmerbauteilen .

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsscheibe, des Reibrings, der Anschlusselemente, der Koppelteile, der Verbindungselemente und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

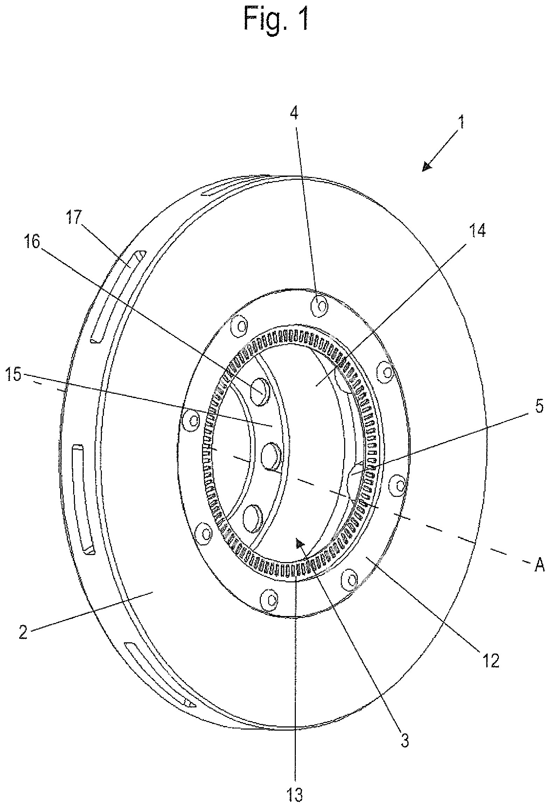

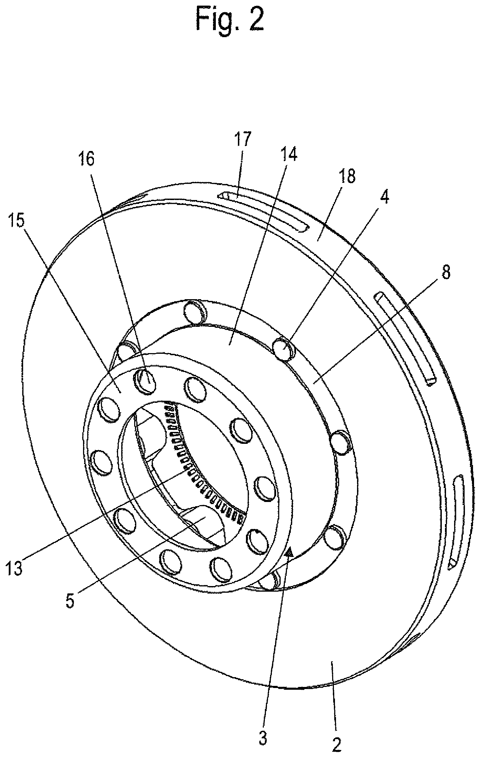

In den **Figuren 1 bis 3** ist eine erste Ausführungsvariante einer erfindungsgemäßen Bremsscheibe 1 dargestellt.

Die Bremsscheibe 1 für eine Scheibenbremse eines Nutzfahrzeugs weist dabei einen Reibring 2 auf, der hier aus zwei parallel zueinander angeordneten ringförmigen Reibringelementen besteht, die über (nicht gezeigte) Stege oder dergleichen miteinander verbunden sind. An einem Innenumfang 11 des Reibrings 2 sind mehrere Koppelteile 5 angeformt, die sich radial zur Drehachse A der Bremsscheibe 1 vom Innenumfang 11 des Reibrings 2 nach innen erstrecken.

Die Koppelteile 5 sind in der hier dargestellten Ausführungsvariante als Aufnahmeaugen geformt, mit sich parallel zur Drehachse A der Bremsscheibe 1 erstreckenden Ausnehmungen 6, in denen jeweils ein Verbindungselement 4, bevorzugt als Schraube oder Bolzen ausgebildet, aufgenommen ist.

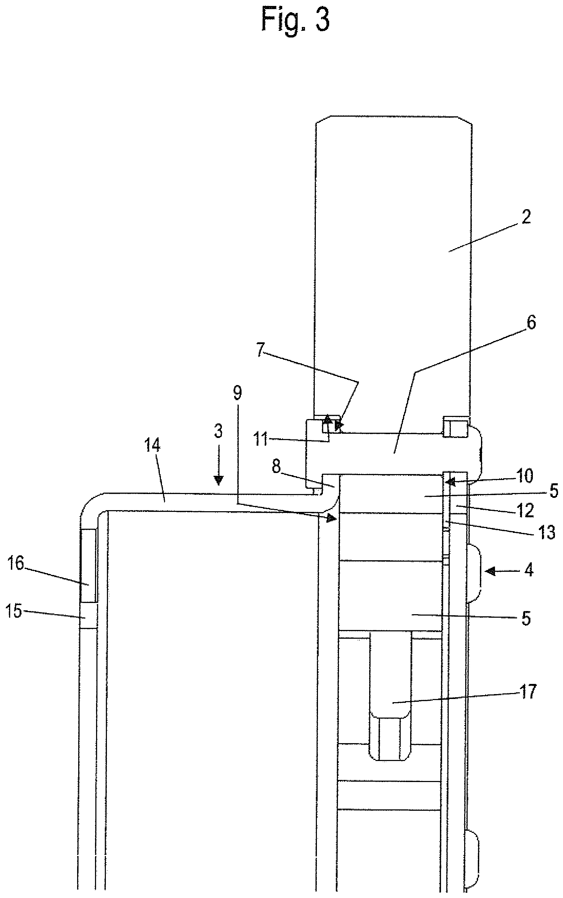

Wie in Figur 3 beispielhaft gezeigt ist, sind die hier als Bolzen ausgebildeten Verbindungselemente 4 an einen dem als Bremsscheibentopf ausgebildeten Anschlusselement 3 nahen Ende mit einem Bolzenkopf versehen und an einem dem Anschlusselement 3 entfernten Ende vertaumelt Das Verbindungselement 4 ist dabei in einer jeweiligen Aufnahme 7, beispielsweise in Gestalt einer kreisförmigen Bohrung, zur Fixierung des Anschlusselements 3 aufgenommen.

Die Aufnahmen 7 sind dabei in einem an dem Anschlusselement 3 sich radial zur Drehachse A der Bremsscheibe 1 erstreckenden Verbindungsring 8 eingelassen, der an einer Seitenfläche 9 der Koppelteile 5 anliegt.

Wie in den Figuren 1 und 3 des Weiteren zu erkennen ist, liegt an einer dem Anschlusselement 3 abgewandten Seitenfläche 10 des wenigstens einen Koppelteils 5 ein entlang des inneren Umfangs 11 des Reibrings 2 angeordneter Stützring 12 an, mit dem ein Schirmen der Bremsscheibe 1 verhindert wird.

Entlang eines inneren Umfangs dieses Stützrings 12 ist besonders bevorzugt noch ein Polrad 13 angeordnet. Denkbar ist aber auch, den Stützring 12 ohne ein solches Polrad 13 auszubilden. Denkbar ist auch, anstelle des geschlossenen Stützrings 12 einzelne Stützelemente zur Verhinderung eines Schirmens der Bremsscheibe 1 einzusetzen.

Das hier als Bremsscheibentopf ausgebildete Anschlusselement 3 weist neben dem sich von einer Mantelfläche 14 radial erstreckenden Verbindungsrings 8 an einem von dem Verbindungsring 8 entfernten Ende des Mantels 14 ein Flanschteil 15 mit einer Vielzahl von Bohrungen 16 auf, zur Fixierung an einer Fahrzeugachse oder einem an der Fahrzeugachse angeordneten entsprechend ausgebildeten Flansch, mit dem die Bremsscheibe 1 an der Fahrzeugachse des Nutzfahrzeugs fixiert werden kann.

Der dem Schirmen entgegenwirkende Stützring 12 ist in der in Figur 1 gezeigten Ausführungsvariante einteilig ausgeführt. Denkbar ist es auch, einen solchen Stützring 12 mehrteilig auszuführen.

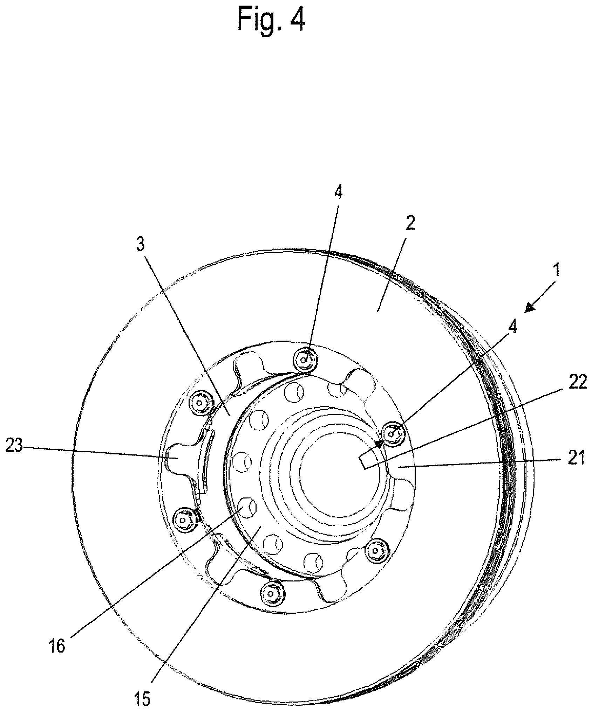

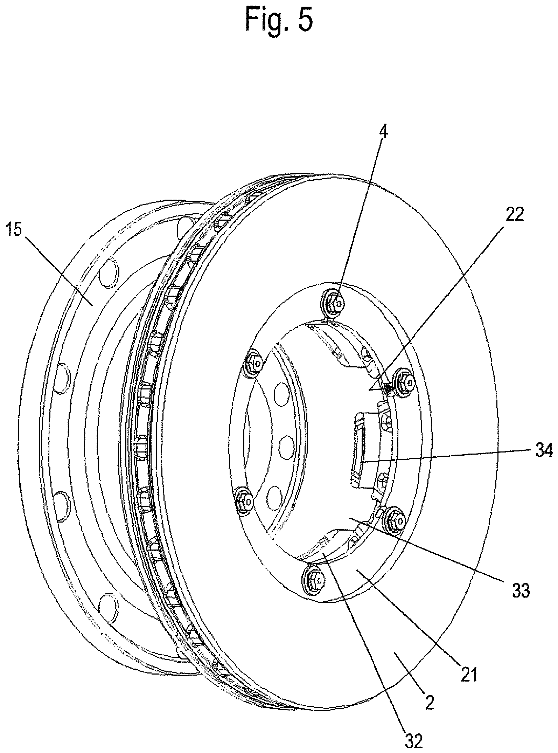

Zwei alternative Ausführungsvarianten einer erfindungsgemäßen Bremsscheibe 1 werden nun anhand der **Figuren 4 bis 9** beschrieben. Bei den hier gezeigten Ausführungsvarianten stehen zur Ankoppelung eines Anschlusselements 3 an den Reibring 2 am inneren Umfang 11 des Reibrings 2 radial nach innen der Drehmomentübertragung, insbesondere bei Bremsvorgängen, dienende, abständig zueinander angeordnete und gleichmäßig über den Umfang 11 verteilte Zähne 32 vor, die in entsprechend dimensionierte Ausnehmungen 34 zwischen axial vorstehenden Zähnen 33 des Anschlusselements 3 eingreifen.

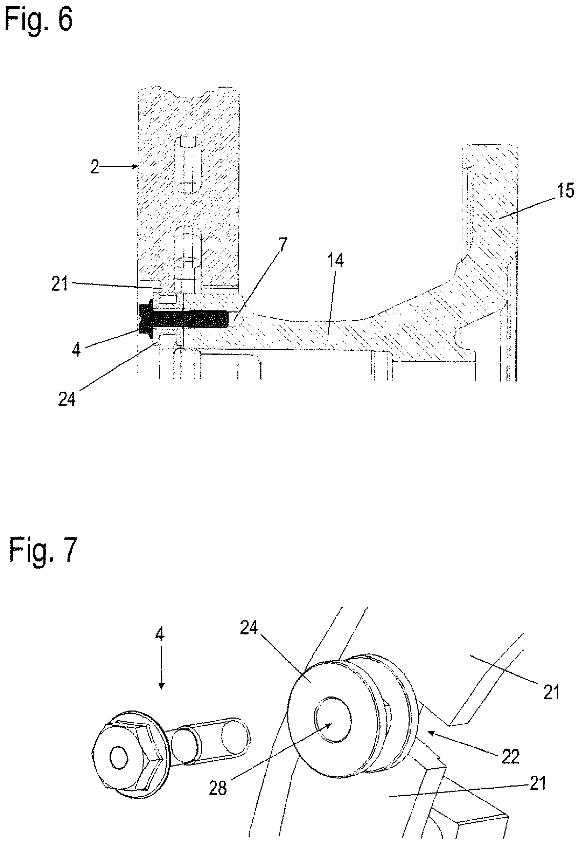

Parallel zu der Reihe von Zähnen 32 ist am inneren Umfang 11 des Reibrings 2 ein ringförmiges Koppelteil 21 angeformt. Dieses ringförmige Koppelteil 21 weist dabei eine Vielzahl von hier schlitzförmigen Ausnehmungen 22 auf, in denen Gleitelemente 24 aufgenommen sind, durch die die vorzugsweise als Schrauben ausgebildeten Verbindungselemente 4 durchgesteckt und in Aufnahmen 7 des Anschlusselements 3 eingeschraubt sind, wie es in Figur 6 beispielhaft dargestellt ist.

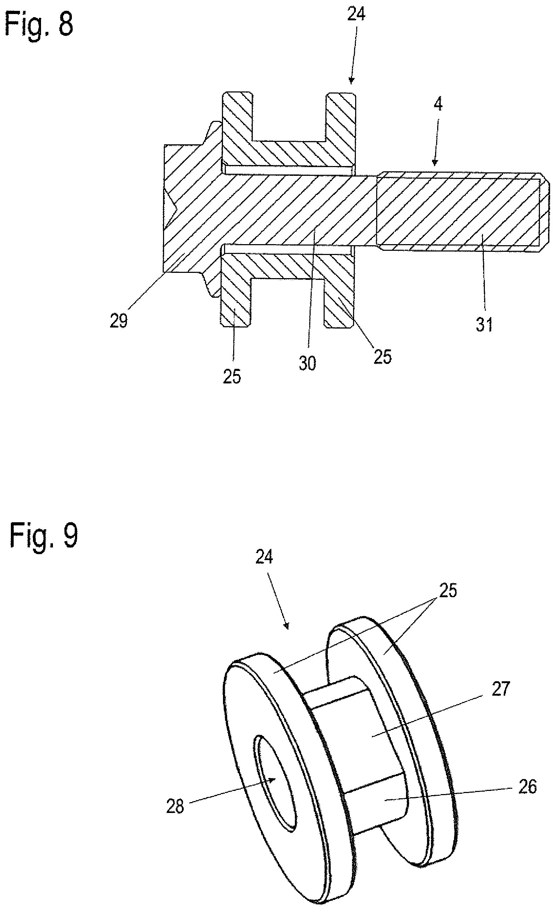

Ein solches Gleitelement 24 ist beispielhaft in Figur 9 dargestellt. Das Gleitelement 24 ist als Buchse 26 mit sich radial von ihren beiden Stirnfläche nach außen erstreckenden Wänden 25 mit parallel zueinander ausgerichteten, einander zugewandten Gleitflächen auf, zur Führung des Gleitelements 24 in einer der Nuten 22 des hier ringstegartig ausgebildeten Koppelteils 21 .

Zur Verhinderung eines Aufdrehens der vorzugsweise als Schrauben ausgebildeten Verbindungselemente 4 im durch die Durchgangsöffnung 28 der Buchse 26 und in die Aufnahme 7 des Anschlusselements 3 eingeschraubten Zustands, weist die Umfangsfläche der Buchse 26 abgeplattete Gleitflächen 27 auf, die entlang der Innenkanten der Nut 22 gleiten können und so eine insbesondere hitzebedingte radiale Bewegung des Reibrings 2 ermöglichen.

Denkbar ist auch, die Gleitflächen 27 und die Führungsflächen 25 vollständig oder partiell mit einer Antiseize-Beschichtung zur Verhinderung eines Festbrennens oder Festrostens des Gleitelements 24 an dem Koppelteil 21 zu verhindern.

Das hier als Schraube ausgeführte Verbindungselement 4 weist, wie in den Figuren 7 und 8 gezeigt ist, einen Schraubenkopf 29 auf, der an einer Außenfläche einer der Wände 25 anliegt. An diesen Schraubenkopf 29 schließt sich ein Schraubenhals 30 an, der in der Buchse 26 aufgenommen ist. An dieses Halsstück 30 schließt sich ein mit einem Gewinde versehenes Halsstück 31 an, das in die Aufnahme 7 des Anschlusselements 3 einschraubbar ist.

Zur weiteren Verhinderung eines Lösens der Schraube ist die dem Schraubenkopf 29 zugewandte Außenfläche der dem Schraubenkopf 29 nahen Wand 25 vorzugsweise mit Riefen, einer Rändelung, einer Diamantbeschichtung oder dergleichen ausgeführt. Des Weiteren kann auch die dem Anschlusselement 3 zugewandte Seitenfläche der dem Anschlusselement 3 nahen Wand 25 mit Riefen, einer Rändelung, einer Diamantbeschichtung oder dergleichen ausgeführt sein, um ein Verdrehen des Gleitelements 24, insbesondere bei einer Ausführung der Buchse 26 ohne Planflächen 27, zu verhindern.

Denkbar ist auch, dass die Buchse 26 quaderförmig ausgebildet ist. Ebenso denkbar ist es, die Gleitringe 25 als Gleitpolygon anstelle der hier in den Figuren 7 und 9 gezeigten ringförmigen Gestaltung auszuführen.

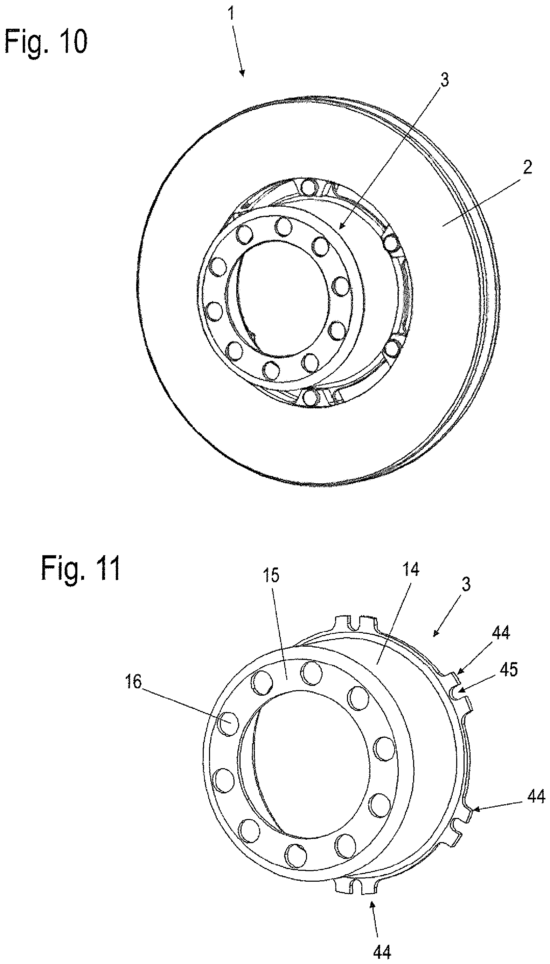

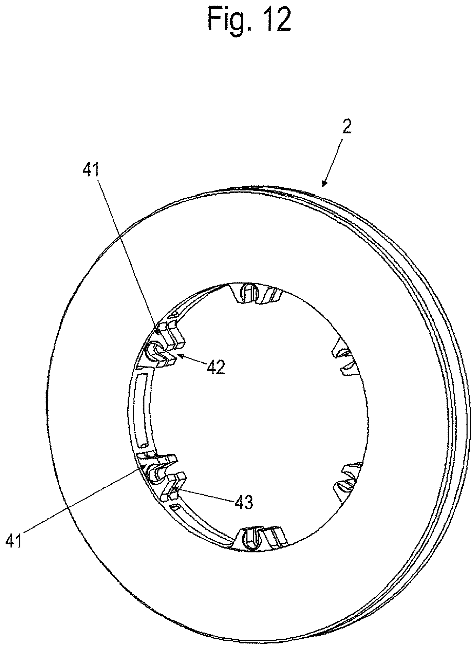

Eine weitere bevorzugte Ausführungsvariante einer erfindungsgemäßen Bremsscheibe 1 wird im Folgenden anhand der **Figuren 10 bis 18** beschrieben.

Bei der hier gezeigten Ausführungsvariante ist das Anschlusselement 3 als Bremsscheibentopf ausgebildet, bei dem zur Ankoppelung an den Reibring 2 mehrere von am stirnseitigen Ende der Mantelfläche 14 sich radial nach außen erstreckende erste Vorsprünge 44 angeformt sind.

Jeder dieser ersten Vorsprünge 44 weist dabei eine zum inneren Umfang des Reibrings 2 hin offene Nut 45 auf. Entsprechend sind am inneren Umfang 11 des Reibrings 2 mehrere radial zur Drehachse A der Bremsscheibe 1 hin vorstehende Koppelteile 41 angeformt.

Jedes dieser Koppelteile 41 weist eine als Aufnahmenut ausgebildete Ausnehmung 42 zur Aufnahme der vorzugsweise als Schrauben oder Bolzen oder auch Nieten ausgebildeten Verbindungselemente 46 auf. Des Weiteren sind diese Koppelteile 41 derart geformt, dass sie einen sich in Umfangsrichtung des Reibrings 2 erstreckenden Schlitz 43 aufweisen, in den die ersten Vorsprünge 44 des als Bremsscheibentopf ausgebildeten Anschlusselements 3 aufnehmbar sind.

Zur Montage des Anschlusselements 3 mit dem Reibring 2 wird das Anschlusselement 3 dabei in axialer Richtung so weit ausgerichtet, dass die ersten Vorsprünge 44 des Anschlusselements 3 axial in einer Ebene zu den Schlitzen 43 der Koppelteile 41 ausgerichtet sind. Anschließend wird der Reibring 2 relativ zum Anschlusselement 3 so gedreht, dass die Nuten 45 der ersten Vorsprünge 44 des Anschlusselements 3 zusammen mit den Ausnehmungen 42 der Koppelteile 41 fluchten, um ein Durchstecken der Verbindungselemente 46 in axialer Richtung zur Drehachse A der Bremsscheibe 1 zu ermöglichen.

Mit den so gestalteten Koppelteilen 41 und den ersten Vorsprüngen 44 ist eine formschlüssige Fixierung des Reibrings 2 mit dem Anschlusselement 3 axial zur Drehachse A der Bremsscheibe 1 gewährleistet. Die Verdrehsicherung des Reibrings 2 zum Anschlusselement 3 erfolgt über die Verbindungselemente 46.

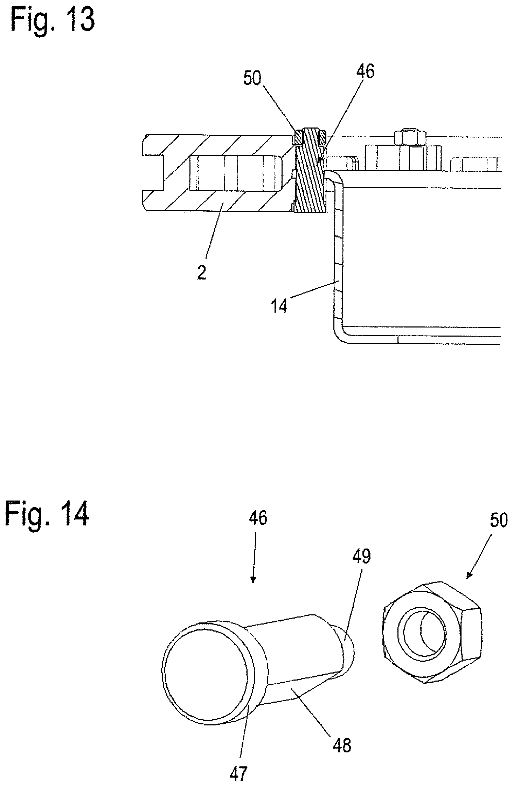

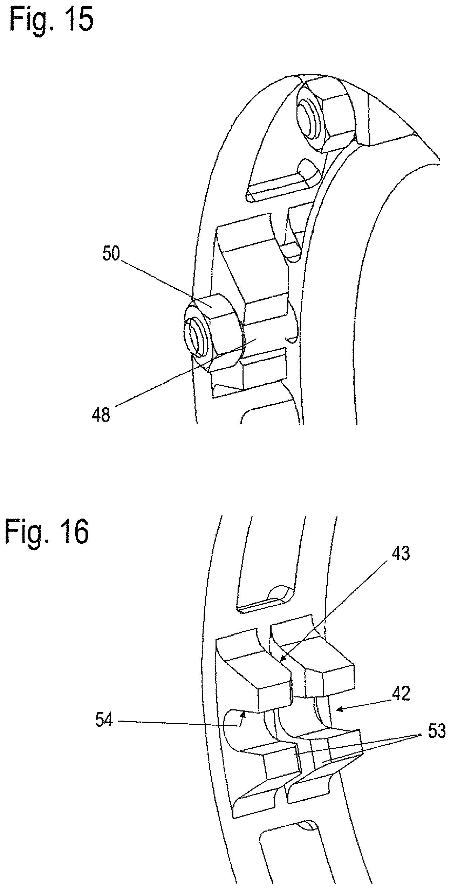

Der montierte Zustand ist dabei in den Figuren 10 und in einer Ausschnittsdarstellung in den Figuren 13 und 15 gezeigt. Wie hier gut zu erkennen ist, liegen die Verbindungselemente 46 im montierten Zustand in den Aufnahmen 42 der Koppelteile 41 und in den Nuten 45 der ersten Vorsprünge 44 des Anschlusselements 3. Im zusammengesetzten Zustand ergeben die Ausnehmungen 42 zusammen mit den Nuten 45 ein Langloch, in dem ein darin gelagertes Verbindungselement radial zur Drehachse A der Bremsscheibe 1 mit Spiel gelagert ist, so dass auch hier eine insbesondere thermisch bedingte Ausdehnung des Reibrings 2 ermöglicht ist.

Eine Ausführungsvariante eines solchen Verbindungselements 46 ist beispielhaft in Figur 14 gezeigt. Das Verbindungselement 46 weist einen Kopf 47 auf, an dem sich ein Halsteil 48 anschließt, das vorzugsweise mit abgeflachten Gleitflächen versehen ist, welche an den Innenflächen 54 der Ausnehmungen 42 bzw. der Nuten 45 gleitend geführt ist. Das dem Kopf 47 beabstandete Ende des Halsteils 48 ist mit einem Gewinde 49 versehen, auf das eine Schraubenmutter 50 aufschraubbar ist, um den Reibring 2 mit dem Anschlusselement 3 über die Verbindungselemente 46 axial zu fixieren.

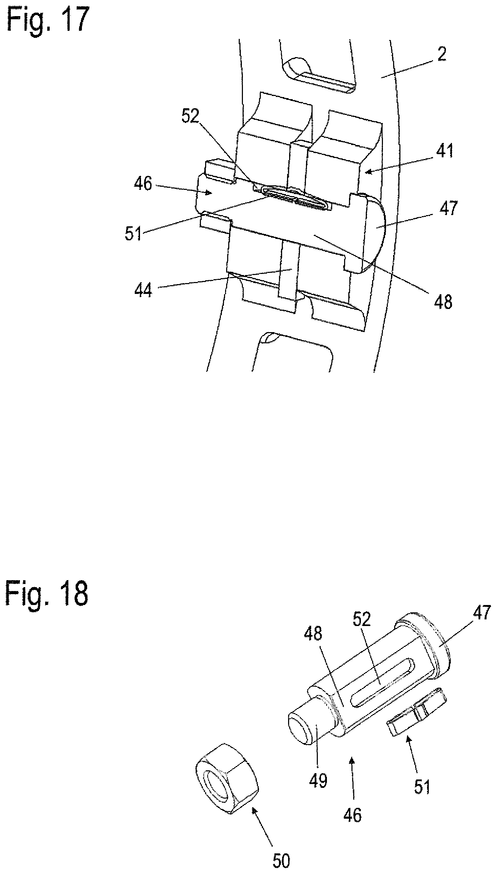

In einer besonderen Ausführungsvariante, dargestellt in den Figuren 17 und 18 weist das Verbindungselement 46 ein Federelement 51 auf, das in einer jeweiligen Aussparung 52 im Halsteil 48 der als Schrauben oder Bolzen ausgebildeten Verbindungselemente 46 aufgenommen ist. Dieses Federelement 51 ist dabei so positioniert, dass es in den Ausnehmungen 42 des jeweiligen Koppelteils 41 und den Nuten 45 des jeweiligen Vorsprungs 44 angeordnet ist und sich einerseits an dem Halsteil 48 der als Schrauben oder Bolzen ausgebildeten Verbindungselemente 46 und andererseits an einer sich radial erstreckenden, die Ausnehmungen 42 seitlich begrenzenden Innenwand 54 der Koppelteile 41 abstützt.

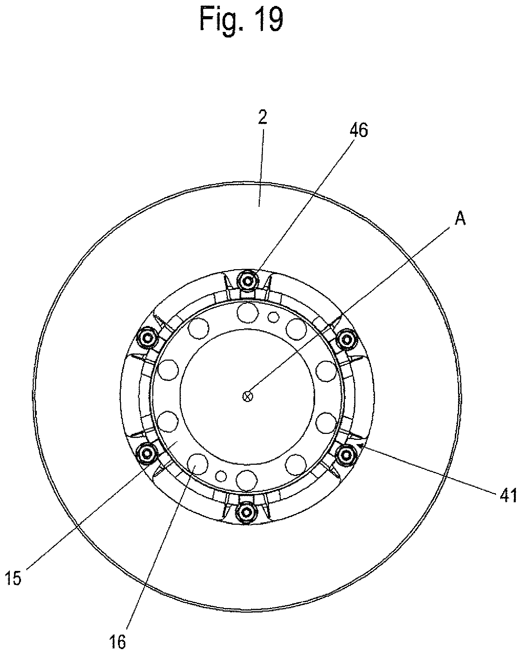

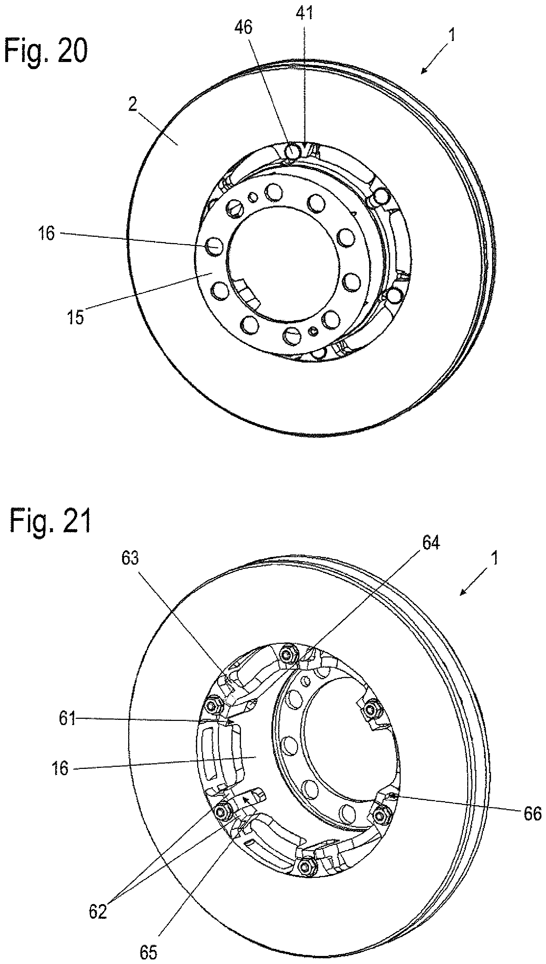

Eine weitere bevorzugte Ausführungsvariante einer erfindungsgemäßen Bremsscheibe 1 wird nun anhand der **Figuren 19 bis 24** näher beschrieben.

Bei dieser Ausführungsvariante sind die Koppelteile des Reibringes 2 entsprechend der Ausführungsvariante gemäß Figuren 10 bis 18 ausgeführt. Das Anschlusselement 3 ist in dieser Ausführungsvariante ebenfalls als Bremsscheibentopf ausgebildet, vorzugsweise als Guss-Adaptertopf.

Auch bei dieser Ausführungsvariante erstrecken sich von einer Mantelaußenfläche 14 des Bremsscheibentopfes erste Vorsprünge 63, die im Wesentlichen entsprechend den ersten Vorsprüngen 44 der zuvor beschriebenen Ausführungsvariante geformt sind und in die Schlitze 43 der Koppelteile 41 eingreifen, zur axialen Fixierung des Anschlusselements 3 mit dem Reibring 2.

Diese ersten Vorsprünge 63 erstrecken sich bei dieser Ausführungsvariante von sich parallel zur Drehachse A der Bremsscheibe 1 erstreckenden zweiten Vorsprüngen 61, die durch eine sich axial erstreckende Nut 64 und zwei Finger 62 aufgeteilt sind. Der radial ausgerichtete erste Vorsprung 63 des Anschlusselements 3 erstreckt sich hier von einer Umfangsaußenfläche 66 eines sich axial zur Drehachse A der Bremsscheibe 1 erstreckenden zweiten Vorsprungs 61 .

Die Finger 62 erstrecken sich dabei über die gesamte axiale Breite der Koppelteile 41 hinweg. In den zwischen den Fingern 62 liegenden Aufnahmenuten 64 ist jeweils ein Mitnehmerelement 65 aufgenommen.

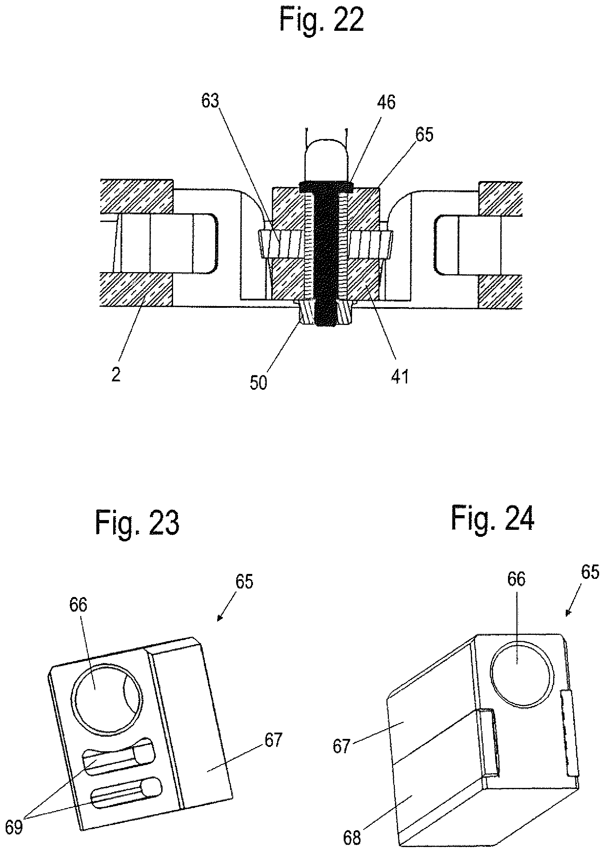

Dieses Mitnehmerelement 65, zwei Ausführungsbeispiele eines solchen Mitnehmerelements 65 sind in den Figuren 23 und 24 beispielhaft dargestellt, weist jeweils eine dezentrale Bohrung zur Aufnahme eines der Verbindungselemente 4, 46 auf, sowie sich (im eingebauten Zustand) parallel zu den als Bolzen oder Schrauben ausgebildeten Verbindungselementen 4 parallele Seitenaußenflächen 67, die in der jeweiligen Nut 42 des jeweiligen Koppelteils 41 sowie in der Aufnahmenut 64 des jeweiligen zweiten Vorsprungs 61 des Anschlusselements 3 gleitbar geführt sind. Denkbar ist auch, das Mitnehmerelement mit einer zentralen Bohrung zur Aufnahme eines der Verbindungselemente 4, 46 zu versehen.

Bei der in Figur 23 gezeigten Ausführungsvariante sind zusätzlich Lüftungsschlitze 69 vorgesehen, um eine Wärmekonvektion durch die Mitnehmerelemente 65 zu ermöglichen.

Zur Verstärkung der Gleitflächen 67 können, wie in Figur 24 dargestellt ist, Einsätze 68 in den Seitenwänden 67 vorgesehen sein, die vorzugsweise aus einem einem Material mit geringer Wärmeleitfähigkeit wie beispielsweise Edelstahl, insbesondere V2A gefertigt sind.

Wie in Figur 16 gezeigt ist, sind die den Schlitz 43 zugewandten Kanten bevorzugt mit Fasen 53 versehen, um im Bedarfsfall die Demontage des Anschlusselements 3 von dem Reibring 2 zu erleichtern, wobei die Fasen 53 als Ansätze für ein Meißelwerkzeug oder dergleichen dienen.

### Bezugszeichenliste

- 1: Bremsscheibe
- 2: Reibring
- 3: Anschlusselement
- 4: Verbindungselement
- 5: Koppelteil
- 6: Ausnehmung
- 7: Aufnahme
- 8: Verbindungsring
- 9: Seitenfläche
- 10: Seitenfläche
- 11: innerer Umfang
- 12: Stützring
- 13: Polrad
- 14: Mantelfläche
- 15: Flansch
- 16: Bohrung
- 17: Lüftungsschlitz
- 18: Schutzring
- 21: Koppelteil
- 22: Nut
- 23: Lüftungsausnehmung
- 24: Gleitelement
- 25: Wand
- 26: Buchse
- 27: Gleitfläche
- 28: Durchgangsöffnung
- 29: Kopf
- 30: Hals
- 31: Halsteil
- 32: Zahn
- 33: Zahn
- 34: Aussparung
- 41: Koppelteil
- 42: Ausnehmung
- 43: Schlitz
- 44: erste Vorsprünge
- 45: Nut
- 46: Verbindungselement
- 47: Kopf
- 48: Halsteil
- 48: Gleitfläche
- 49: Gewinde
- 50: Schraubenmutter
- 51: Federelement
- 52: Aussparung
- 53: Auffasung
- 54: Innenwand

- 61: Vorsprung
- 62: Finger
- 63: Vorsprung
- 64: Nut
- 65: Mitnehmerelement
- 66: Umfangsaußenfläche
- 67: Seitenaußenfläche
- 68: Einsatz
- 69: Lüftungsschlitz

- A: Drehachse

## Patentansprüche

1. Bremsscheibe (1) für eine Scheibenbremse eines Nutzfahrzeugs, aufweisend
- einen Reibring (2),
- wenigstens ein sich von einem inneren Umfang des Reibringes (2) axial zu einer Drehachse (A) der Bremsscheibe (1) erstreckendes Anschlusselement (3) zur Befestigung der Bremsscheibe (1) an einer Radachse,
- wobei das Anschlusselement (3) über Verbindungselemente (4, 46) lösbar mit dem Reibring (2) verbunden ist,
- wobei am inneren Umfang (11) des Reibringes (2) mehrere radial zur Drehachse (A) der Bremsscheibe (1) hin vorstehendes Koppelteile (41) mit jeweils wenigstens einer Ausnehmung (42) angeformt ist,
- wobei die Verbindungselemente (4, 46) in den Ausnehmungen (42) des wenigstens einen Koppelteils (41) und in Aufnahmen (7) des Anschlusselements (3) aufgenommen sind,
**dadurch gekennzeichnet, dass**
jedes der Koppelteile (41) eine als, zur Drehachse der Bremsscheibe (1) hin offene Aufnahmenut ausgebildete Ausnehmung (42) und einen sich in Umfangsrichtung des Reibringes (2) erstreckenden Schlitz (43) aufweist, in dem ein sich radial zur Drehachse (A) der Bremsscheibe (1) erstreckender erster Vorsprung (44, 63) des Anschlusselements (3) mit einer zum inneren Umfang des Reibringes (2) hin offene Nut (45) aufnehmbar ist.

2. Bremsscheibe nach Anspruch 1, **dadurch gekennzeichnet, dass** das Anschlusselement (3) als Bremsscheibentopf ausgebildet ist.

3. Bremsscheibe nach Anspruch 1, **dadurch gekennzeichnet, dass** das Anschlusselement (3) als an einer Radachse befestigte Nabe ausgebildet ist.

4. Bremsscheibe nach einem der vorstehenden Ansprüche, **dadurch gekennzeichnet, dass** die Verbindungselemente (4, 46) als Schrauben, Bolzen oder Nieten ausgebildet sind.

5. Bremsscheibe nach einem der vorstehenden Ansprüche, **dadurch gekennzeichnet, dass** wenigstens ein Ende der Verbindungselemente (4) in einem das Anschlusselement (3) mit dem Reibring (2) verbindenden, montierten Zustand vertaumelt ist.

6. Bremsscheibe nach einem der vorstehenden Ansprüche, **dadurch gekennzeichnet, dass** die Ausnehmung (6) des wenigstens einen Koppelteils (5, 21) als Bohrung oder Langloch ausgebildet ist.

7. Bremsscheibe nach einem der vorstehenden Ansprüche, **dadurch gekennzeichnet, dass** die als Schrauben oder Bolzen ausgebildeten Verbindungselemente (46) ein in der Ausnehmung (42) des jeweiligen Koppelteils (41) und des jeweiligen Vorsprungs (44) radial bewegbares abgeflachtes Halsteil (48) aufweisen.

8. Bremsscheibe nach einem der vorstehenden Ansprüche, **dadurch gekennzeichnet, dass** die Koppelteile (41) zum Schlitz (43) hin abgefast ausgebildet sind.

9. Bremsscheibe nach einem der vorstehenden Ansprüche, **dadurch gekennzeichnet, dass** in den Ausnehmungen (42) des jeweiligen Koppelteils (41) und den Nuten (45) des jeweiligen Vorsprungs (44) wenigstens ein Federelement (51) angeordnet ist, das sich einerseits an dem Halsteil (48) der als Schrauben oder Bolzen ausgebildeten Verbindungselemente (46) und andererseits an einer sich radial erstreckenden, die Ausnehmungen (42) seitlich begrenzenden Innenwand (54) der Koppelteile (41) abstützt.

10. Bremsscheibe nach Anspruch 9, **dadurch gekennzeichnet, dass** die Federelemente (51) in einer jeweiligen Aussparung (52) im Halsteil (48) der als Schrauben oder Bolzen ausgebildeten Verbindungselemente (46) aufgenommen ist.

11. Bremsscheibe nach einem der vorstehenden Ansprüche, **dadurch gekennzeichnet, dass** der radial ausgerichtete erste Vorsprung (63) der Anschlusselements (3) sich von einer Umfangsaußenfläche (66) eines sich axial zur Drehachse (A) der Bremsscheibe (1) erstreckenden zweiten Vorsprungs (61) erstreckt.

12. Bremsscheibe nach Anspruch 11, **dadurch gekennzeichnet, dass** die Halsteile (48) der als Schrauben oder Bolzen ausgebildeten Verbindungselemente (46) in einem jeweiligen Mitnehmerelement (65) aufgenommen sind, das in einer jeweiligen Nut (42) des jeweiligen Koppelteils (41) und in einer Aufnahmenut (64) des jeweiligen zweiten Vorsprungs (61) des Anschlusselements (3) gleitbar geführt ist.

13. Bremsscheibe nach Anspruch 12, **dadurch gekennzeichnet, dass** jedes der Mitnehmerelemente (65) eine dezentrale Bohrung zur Aufnahme eines der Verbindungselemente (4, 46) aufweist, wobei radial den Reibflächen nahe Außenflächen des Mitnehmerelements (65) in der Nut (64) des zweiten Vorsprungs (61) des Anschlusselementes (3) geführt sind.

14. Scheibenbremse für ein Nutzfahrzeug, mit einer Bremsscheibe (1) und einem die Bremsscheibe (1) übergreifenden Bremssattel sowie beidseitig der Bremsscheibe (1) im Bremssattel angeordneten Bremsbelägen, **dadurch gekennzeichnet, dass** die Bremsscheibe (1) gemäß einem der vorstehenden Ansprüche ausgebildet ist.

## Claims

1. A brake disc (1) for a disc brake of a utility vehicle, having
- a friction ring (2),
- at least one connector element (3) extending axially in relation to an axis of rotation (A) of the brake disc (1) from an inner circumference of the friction ring (2) for fastening the brake disc (1) to a wheel axis,
- the connector element (3) being connected detachably to the friction ring (2) by connecting elements (4, 46),
- a plurality of coupling parts (41) that project radially in relation to the axis of rotation (A) of the brake disc (1), each having at least one recess (42), being integrally formed on the inner circumference (11) of the friction ring (2),
- the connecting elements (4, 46) being received in the recesses (42) of the at least one coupling part (41) and in receivers (7) of the connector elements (3),
**characterised in that**
each of the coupling parts (41) has a recess (42) in the form of a receiving groove that is open towards the axis of rotation of the brake disc (1) and a slit (43) that extends in the circumferential direction of the friction ring (2) and in which can be received a first projection (44, 63) of the connector element (3) that extends radially in relation to the axis of rotation (A) of the brake disc (1) with a groove (45) that is open towards the inner circumference of the friction ring (2).

2. A brake disc according to claim 1, **characterised in that** the connector element (3) takes the form of a brake disc chamber.

3. A brake disc according to claim 1, **characterised in that** the connector element (3) takes the form of a hub fastened to a wheel axle.

4. A brake disc according to any one of the preceding claims, **characterised in that** the connecting elements (4, 46) take the form of screws, bolts or rivets.

5. A brake disc according to any one of the preceding claims, **characterised in that** at least one end of each connecting element (4, 46) is radially riveted in an assembled state connecting the connector element (3) to the friction ring (2).

6. A brake disc according to any one of the preceding claims, **characterised in that** the recess (6) of the at least one coupling part (5, 21) takes the form of a drill hole or elongated hole.

7. A brake disc according to any one of the preceding claims, **characterised in that** the connecting elements (46) in the form of screws or bolts have a flattened neck portion (48) that can be moved radially in the recess (42) of the corresponding coupling part (41) and the corresponding projection (44).

8. A brake disc according to any one of the preceding claims, **characterised in that** the coupling parts (41) are chamfered towards the slit (43).

9. A brake disc according to any one of the preceding claims, **characterised in that** arranged in the recesses (42) of the coupling part (41) and in the grooves (45) of the projection (44) is at least one spring element (51) that rests, on one hand, on the neck portion (48) of the connecting elements in the form of screws or bolts and, on the other, on a radially extending inner wall (54) of the coupling parts (41) that laterally delimits the recesses (42).

10. A brake disc according to claim 9, **characterised in that** the spring elements (51) are received in a corresponding notch (52) in the neck portion (48) of the connecting elements (46) in the form of screws or bolts.

11. A brake disc according to any one of the preceding claims, **characterised in that** the radially oriented first projection (64) of the connector element (3) extends from a circumferentially outer surface (66) of a second projection (61) that extends axially to the axis of rotation (A) of the brake disc.

12. A brake disc according to claim 11, **characterised in that** the neck portions (48) of the connecting elements (46) in the form of a screws or bolts are received in a corresponding entraining element (65) that is guided slidably in a corresponding groove (42) of the corresponding coupling part (41) and in a receiving groove (64) in the corresponding second projection (61) of the connector element (3).

13. A brake disc according to claim 12, **characterised in that** each of the entraining elements (65) has a decentralised hole for receiving one of the connecting elements (4, 46), external surfaces of the entraining element (65) radially close to the friction surfaces being guided in the groove (64) of the second projection (61) of the connector element (3).

14. A disk brake for a utility vehicle, having a brake disc (1), a brake calliper straddling the brake disc (1) and brake pads arranged in the brake calliper on either side of the brake disc (1), **characterised in that** the brake disc (1) is designed according to one of the preceding claims.

## Revendications

1. Disque (1) de frein d'un frein à disque d'un véhicule utilitaire, comportant
- un anneau (2) de friction,
- au moins un élément (3) de raccordement s'étendant d'un pourtour intérieur de l'anneau (2) de friction, axialement par rapport à un axe (A) de rotation du disque (1) de frein pour la fixation du disque (1) de frein à un essieu,
- dans lequel l'élément (3) de raccordement est, par des éléments (4, 46) de liaison, relié de manière amovible à l'anneau (2) de friction,
- dans lequel, sur le pourtour (11) intérieur de l'anneau (2) de friction, viennent de matière plusieurs parties (41) d'accouplement en saillie radialement par rapport à l'axe (A) de rotation du disque (1) de frein ayant chacune au moins un évidement (42),
- dans lequel les éléments (4, 46) de liaisons sont reçus dans les évidements (42) de la au moins une partie (41) d'accouplement et dans des logements (7) de l'élément (3) de raccordement,
**caractérisé en ce que**
chacune des parties (41) d'accouplement a un évidement (42) constitué sous la forme d'une rainure de réception ouverte par rapport à l'axe de rotation du disque (1) de frein et une fente (43) s'étendant dans la direction du pourtour de l'anneau (2) de friction, dans laquelle une première saillie (44, 63), s'étendant radialement par rapport à l'axe (A) de rotation du disque (1) de frein, de l'élément (3) de raccordement, peut être reçue par une rainure (45) ouverte vers le pourtour intérieur de l'anneau (2) de friction.

2. Disque de frein suivant la revendication 1, **caractérisé en ce que** l'élément (3) de raccordement est constitué sous la forme d'un pot de disque de frein.

3. Disque de frein suivant la revendication 1, **caractérisé en ce que** l'élément (3) de raccordement est constitué sous la forme d'un moyeu fixé à un essieu.

4. Disque de frein suivant l'une des revendications précédentes, **caractérisé en ce que** les éléments (4, 46) de liaison sont constitués sous la forme de vis, de boulons ou de rivets.

5. Disque de frein suivant l'une des revendications précédentes, **caractérisé en ce qu'**au moins une extrémité des éléments (4) de liaison est en connexion à l'état monté reliant l'élément (3) de raccordement à l'anneau (2) de friction.

6. Disque de frein suivant l'une des revendications précédentes, **caractérisé en ce que** l'évidement (6) de la au moins une partie (5, 21) d'accouplement est constitué sous la forme d'un trou ou d'une boutonnière.

7. Disque de frein suivant l'une des revendications précédentes, **caractérisé en ce que** les éléments (46) de liaison constitués sous la forme de vis ou de boulons ont une partie (48) de col aplatie mobile radialement dans l'évidement (42) de la partie (41) d'accouplement respective et de la saillie (44) respective.

8. Disque de frein suivant l'une des revendications précédentes, **caractérisé en ce que** les parties (41) d'accouplement sont constituées biseautées vers la fente (43) .

9. Disque de frein suivant l'une des revendications précédentes, **caractérisé en ce que**, dans les évidements (42) de la partie (41) d'accouplement respective et dans les rainures (45) de la saillie (44) respective, est disposé au moins un élément (51) de ressort qui s'appuie d'une part sur la partie (48) de col des éléments (46) de liaison constitués sous forme de vis ou de boulons et d'autre part sur une paroi (54) intérieure, s'étendant radialement et délimitant latéralement les évidements (42), de la partie (41) d'accouplement.

10. Disque de frein suivant la revendication 9, **caractérisé en ce que** les éléments (51) de ressort sont reçus dans un évidement (52) respectif de la partie (48) de col des éléments (46) de liaison constitués sous forme de vis ou de boulons.

11. Disque de frein suivant l'une des revendications précédentes, **caractérisé en ce que** la première saillie (63) dirigée radialement de l'élément (3) de raccordement s'étend d'une surface (66) extérieure de pourtour d'une deuxième saillie (61) s'étendant axialement par rapport à l'axe (A) de rotation du disque (1) de frein.

12. Disque de frein suivant la revendication la revendication 11, **caractérisé en ce que** les parties (48) de col des éléments (46) de liaison constitués sous la forme de vis ou de boulons sont reçues dans un élément (65) respectif d'entraînement qui est guidé avec possibilité de glisser dans une rainure (42) respective de l'élément (41) d'accouplement respectif et dans une rainure (64) de réception de la deuxième saillie (61) respective de l'élément (3) de raccordement.

13. Disque de frein suivant la revendication 12, **caractérisé en ce que** chacun des éléments (65) d'entraînement a un trou décentré de réception de l'un des éléments (4, 46) de liaison, des surfaces extérieures, proches radialement des surfaces de friction, de l'élément (65) d'entraînement étant guidées dans la rainure (64) de la deuxième saillie (61) de l'élément (3) de raccordement.

14. Frein à disque d'un véhicule utilitaire, comprenant un disque (1) de frein et un étrier de frein chevauchant le disque (1) de frein, ainsi que des garnitures de frein montées dans l'étrier de frein des deux côtés du disque (1) de frein, **caractérisé en ce que** le disque (1) de frein est constitué suivant l'une des revendications précédentes.
